# FASCICULE DE BREVET EUROPEEN

(11) **EP 4 214 269 B1**
(45) Date de publication et mention de la délivrance du brevet: **18.03.2026**
(21) Numéro de dépôt: 21785963.6
(22) Date de dépôt: 16.09.2021
(51) Int. Cl.: C08J 7/02, A01N 25/10, A01N 37/04, A61K 9/16, C08L 101/00, A01N 63/10, C09D 7/60, C08K 5/04, C08L 53/00

(54) **COMPOSITION FLUIDE POUR REVETEMENT DE SURFACE POUR ABSORPTION ET DIFFUSION DE COMPOSES VOLATILS**
OBERFLÄCHENBESCHICHTETE FLÜSSIGE ZUSAMMENSETZUNG ZUR ABSORPTION UND DIFFUSION VON FLÜCHTIGEN VERBINDUNGEN
SURFACE-COATING FLUID COMPOSITION FOR ABSORBING AND DIFFUSING VOLATILE COMPOUNDS

(30) Priorité: 17.09.2020 FR 2009430
(43) Date de publication de la demande: 26.07.2023
(73) Titulaire: Ceva Santé Animale, 33500 Libourne (FR)
(72) Inventeur: ESCUDIE, Yannick, 64420 NOUSTY (FR); DURAND, Patrick, 24100 BERGERAC (FR); GUERRET, Olivier, 46170 PERN (FR)
(74) Mandataire: Regimbeau
(86) Numéro de dépôt international: PCT/FR2021/051589
(87) Numéro de publication internationale: WO 2022/058690

(56) Documents cités:
- EP-A1- 3 187 046
- WO-A1-2012/004849
- WO-A1-2016/094112
- WO-A2-2013/019772
- FR-A1- 3 012 814

## Description

Les substances sémiochimiques (phéromones, kairomones, allomones et synomones), sont des substances volatiles de plus en plus utilisées dans de nombreux domaines que ce soit, par exemple, pour contrôler le comportement des animaux ou pour réguler les populations d'insectes ravageurs.

Par ailleurs, ces substances sémiochimiques sont des molécules sensibles chimiquement et plus particulièrement sensibles à l'oxydation (notamment en présence d'UV ou de radicaux libres) ou aux températures car présentant des liaisons chimiques insaturées (double ou triple liaisons), des groupes alcool ou des cycles éther tendus. Or la formation d'impuretés par des processus d'oxydation peut avoir des effets catastrophiques sur l'efficacité des sémiochimiques (un attractant peut par exemple devenir un répulsif ou bien la phéromone d'un insecte en particulier peut se transformer en la phéromone d'un autre insecte).

Un des problèmes majeurs qui se pose pour pouvoir utiliser de manière optimale ces substances sémiochimiques est la possibilité de les stocker et de les relarguer à l'aide de matériaux permettant non seulement la préservation de la pureté des sémiochimiques pendant la fabrication du dispositif et pendant le temps d'utilisation, mais aussi un relargage contrôlé à des taux suffisants sur de longues périodes. Un autre problème est de pouvoir charger plusieurs fois les matériaux afin d'éviter de devoir fabriquer et utiliser un nouvel article à chaque nouvelle utilisation souhaitée.

Il existe des compositions liquides ou fluides, de type peintures, comprenant un composé actif tel qu'un insecticide par exemple, destines à être appliquées sur des supports, tel que des murs par exemple, afin de permettre la diffusion dudit compose dans l'air ambiant. Cependant, une fois la diffusion terminée par épuisement du composé contenu dans le revêtement, il n'est plus possible de reproduire la diffusion sauf à répéter l'application d'une nouvelle couche de composition, c'est à dire à remettre une couche de peinture contenant le compose actif à diffuser.

Cela est lourd et revient cher car implique des applications répétitives de la composition de type peinture et une superposition de couches sur le support, ce qui n'est pas souhaitable sur le long terme.

L'utilisation de matrices polymériques pour le relargage de substances actives, notamment des substances sémiochimiques est connue depuis longtemps puisque déjà évoquée par exemple dans la revue de Campion (D.G. Campion, Pestic. Sci. 1978, 9, 434-440). Il est notamment fait référence dans cette publication à l'utilisation de matrices caoutchouteuses (ou élastomériques). Cependant, il y est aussi souligné que de telles matrices ne permettent pas un relargage continu dans le temps et présentent une grande sensibilité aux conditions atmosphériques.

Plus tard, d'autres matrices élastomériques ont été proposées : par exemple, en 1987, dans le brevet US4703070. Mais, ces matrices élastomériques nécessitent d'incorporer la substance active avant que la matrice élastomérique ne soit totalement réticulée. Or, à cause de leurs structures chimiques spécifiques (liaison insaturées, présence de fonctions alcool...) peu de substances sémiochimiques peuvent supporter sans détérioration soit les hautes températures nécessaires à la fin de la réticulation, soit les composants réactifs du prépolymère. Or l'activité des substances sémiochimiques est fortement influencée par une détérioration même légère de la molécule (comme un changement d'isomérie par exemple).

Une autre matrice thermoplastique pour le relargage de sémiochimiques a fait l'objet d'un dépôt de brevet en 1996 (US005504142). Dans ce cas, la matrice est un copolymère de type PEBAX^{®}. Le Pebax^{®} est un élastomère thermoplastique ou un polyamide flexible sans plastifiant composé d'une chaîne linéaire régulière de segments polyamides rigides et de segments polyéther flexibles. Cependant ce type de matrice nécessite l'utilisation d'un solvant servant de vecteur à la substance active pour pénétrer dans la matrice copolymère. Ces solvants nécessaires à la mise en œuvre du procédé décrit dans cette invention sont potentiellement nocifs pour l'environnement ou peuvent avoir une interaction négative avec les animaux. La présence de tels solvants (dérivés de l'acide undécylénique aux propriétés biocides bien connues de l'homme du métier) est donc rédhibitoire pour une utilisation d'une telle matrice pour stocker et relarguer des substances sémiochimiques.

Une autre grande famille de matrices copolymères a ensuite été proposée à base de polyéthylène glycol (PEG). En 2005 par exemple, Brown et al (J. Am. Chem. Soc. 2005, 127, 11238-11239 ), proposaient d'utiliser un copolymère à base de polyéthylène glycol (PEG) et d'un fluoropolymère hydrophobe hyperbranché pour stocker et relarguer un alcool terpénique insaturé (le géraniol). Bien que montrant de grandes capacités à stocker cette molécule, un tel copolymère conduisait à des temps de relargage de la substance active très réduits ce qui est incompatible avec les relargages sur des longues durées nécessaires dans l'utilisation des sémiochimiques dans l'agriculture. En 2010, Shakil et al (p228 de la revue de M. Kah dans Environment International 63 (2014) 224-235) proposaient des formulations aqueuses à base de copolymères amphiphiles contenant des blocs PEG pour relarguer des insecticides. Cependant ces formulations aqueuses présentent l'inconvénient de ne pas être solides et de la présence d'eau peut induire des modifications chimiques des sémiochimiques.

Les matrices copolymères d'éthylène et de vinyl acétate ont aussi été testées pour délivrer des composés bioactifs tels que des attractants alimentaires, des pesticides, comme décrit dans le brevet US5135744.

Cependant, le mélange du copolymère et du composé bioactif et la mise en forme finale (extrusion) doivent se faire à des températures élevées (entre 80 et 110°C) ce qui n'est pas réalisable avec la plupart des substances sémiochimiques qui soit ne supportent pas ces conditions de transformation soit s'évaporent rapidement à la sortie de l'extrudeuse ce qui rend la charge de substance sémiochimique dans le plastique difficilement contrôlable.

D'autres copolymères ont aussi été proposés par exemple dans WO2012/095444, qui revendique la formation de microcapsules composées de plusieurs polymères dont des C1-C24-alkyl ester d'acide acrylique. Ce type de matrice ne peut être utilisé que pour des substances sémiochimiques ne présentant pas de sensibilité aux peroxydes qui sont nécessaires à la polymérisation de la matrice, c'est-à-dire pour un nombre restreint de substances sémiochimiques. De même, le brevet WO2013156249A1 décrit une composition comprenant un pesticide et un copolymère statistique qui contient sous forme polymérisée de l'acide acrylique ou méthacrylique (monomère A), un mono poly(C2-6 alkylène alcool)(méth)acrylate terminé par un alkyle C12-C22(monomère B), et un méthacrylate d' alkyle C1-C6 (monomère C). Cependant ce type de copolymère statistique est obtenu une fois encore par polymérisation avec un générateur de radical (dans les exemples de ce brevet du tert.-butylperpivalate) qui comme déjà souligné représente un danger de détérioration des substances sémiochimiques courantes. Par exemple, il est bien connu que la (E,Z)-7,9 dodécadiénylacétate (phéromone sexuelle de l'eudémis, tordeuse de la vigne) se transforme en (E,E)-7,9 dodécadiénylacétate qui n'a aucun effet sur l'insecte.

De même le document EP0338732 décrit une matrice pour le relargage et la diffusion de substances actives telles que des parfums et des phéromones dans l'atmosphère. La matrice est perméable aux substances actives et est formée d'un copolymère qui peut être suffisamment ramolli à une température comprise entre 45°C et 160°C pour y incorporer les substances. La matrice est formée d'un copolymère séquencé sensiblement linéaire qui est un produit de réaction d'un polydiorganosiloxane qui forme des segments mous dans ledit produit de réaction et un diisocyanate qui forme des segments durs, lesdits segments mous comprenant de 70 à 99 % en poids, sur la base du poids dudit copolymère. Le problème avec une telle matrice est que sa fabrication implique des températures élevées non compatibles avec les phéromones. En outre, une fois la phéromone diffusée, il n'est pas possible de recharger la matrice.

Le document WO0150859 décrit aussi une composition insectifuge à libération lente comprenant un insectifuge, un produit chimique oléophile soluble dans l'insectifuge et une matrice de type polysaccharidique dans laquelle la combinaison de l'insectifuge et du produit chimique oléophile est piégée dans la matrice de telle sorte que le répulsif soit libéré de la matrice, un substrat de tissu contenant la composition et un procédé de préparation de la composition. Le problème avec ce type de composition est que la solidification passe par une étape de séchage à des températures incompatibles avec des composés de type phéromones qui sont très sensibles à la chaleur et qui vont s'évaporer lors de cette étape. De plus, comme indiqué pour d'autres supports, une fois le composé insectifuge complètement diffusé, la composition ne peut pas être rechargée.

FR3032972 décrit une composition comprenant une phase élastomère polymère sous la forme d'un copolymère séquencé acrylique et un composé actif odorant, des méthodes d'absorption du composé actif odorant et de libération dudit composé actif odorant pendant une période de temps donnée. Ce document décrit aussi des objets ou des articles comprenant une phase élastomère polymère sous la forme d'un copolymère séquencé acrylique et un composé actif odorant. Ce document ne décrit cependant pas des compositions liquides ou fluides mais des compositions obtenues par moulage par injection, extrusion, co-extrusion ou moulage par extrusion/soufflage menant à la préparation de parties ou d'éléments profilés, de blocs, de tubes, de feuilles ou encore de films.

EP 3 187 046 A1 et FR 3 012 814 A1 divulguent une composition comprenant une phase élastomère polymère et un composé actif odorant, dans laquelle ledit composé actif odorant est libéré sur une période de temps donnée. La phase élastomère est formée à partir de blocs d'un copolymère séquencé acrylique.

La présente invention propose donc un nouveau type de composition liquide, de type peinture ou encre, qui est appliquée sur tout support et forme un revêtement de surface solide - ou à tout le moins cohésif - et qui peut être chargé par un composé sémiochimique puis qui peut diffuser progressivement ledit composé sur de longues périodes. En outre, une fois la diffusion dudit composé terminée, le revêtement peut être rechargé avec la substance sémiochimique par simple mise en contact de ladite substance avec le revêtement. Cela permet d'atteindre l'objectif d'adsorption, de protection, de relargage contrôlé, et ce de manière répétée, de ladite substance sémiochimique sur de longues durées.

Ainsi la présente invention vise, en premier lieu, une méthode de diffusion d'une substance sémiochimique comprenant les étapes suivantes :
- a. fourniture d'une composition solide comprenant une résine polymérique, une charge optionnelle et un pigment optionnel,
- b. Mise en contact d'une composition comprenant une substance sémiochimique avec la composition solide,
- c. Imprégnation de la composition solide par la composition comprenant la substance sémiochimique,
- d. Diffusion de ladite substance sémiochimique depuis la composition solide,
- e. optionnellement, répétition des étapes b à d.

La méthode selon l'invention est caractérisée en ce que la composition solide comprenant une résine polymérique comprend en outre au moins un copolymère à blocs acryliques, ledit copolymère à blocs acryliques comprenant au moins un bloc polyméthacrylate d'alkyle et au moins un bloc polyacrylate d'alkyle ; le dit copolymère étant dispersé et immobilisé dans la résine polymérique.

Typiquement l'alkyle est un alkyle en C1-C10, en particulier C1-C8, linéaire ou branché.

La méthode selon l'invention est caractérisée en ce que l'étape a) est précédée des étapes α1) à α3) ; l'étape α1) comprenant la fourniture d'une composition liquide comprenant au moins une résine polymérique, au moins un solvant, optionnellement au moins un pigment, optionnellement au moins une charge et optionnellement au moins un copolymère à blocs acryliques, ledit copolymère à blocs acryliques comprenant au moins un bloc polyméthacrylate d'alkyle et au moins un bloc polyacrylate d'alkyle ; l'étape α2) comprenant l'application de la composition liquide sur un support et l'étape α3) comprenant l'évaporation du solvant. Typiquement l'alkyle est un alkyle en C1-C10, en particulier C1-C8, linéaire ou branché.

Une « charge » est un ingrédient inerte vis-à-vis des composés sémiochimiques, en général il s'agit d'une substance minérale d'origine naturelle blanche ou légèrement colorée sous forme de particules très fines, particules qui sont pratiquement insolubles dans le milieu de la composition. La charge sert par exemple à épaissir la composition, à améliorer son accroche, donner un aspect esthétique ou encore limiter le retrait un fois le solvant évaporé et la composition solidifiée. La charge peut être choisie dans le groupe constitué par le talc, les carbonates, les argiles, ainsi que leurs mélanges.

Par résine polymérique on entend ici des résines usuellement utilisées dans les compositions de type encre de sérigraphie par exemple et peut comprendre les résines cellulosiques, les résines vinyliques ou encore les résines polyuréthanes, mono ou bicomposants. Les résines cellulosiques comprennent typiquement des résines nitrocellulosiques d'éthylcellulose, d'acetobutyrate ou acétopropionate de cellulose et peuvent être associées à d'autres résines de type alkydes, polyesters, polyuréthane ou polyamides. Les résines vinyliques comprennent typiquement des acétates de polyvinyle, des polychlorures de vinyle, des copolymères d'acétate de vinyle/chlorure de vinyle ou des ethers polyvinyliques.

Une couche mince, dans le cadre de la présente invention, s'entend d'une couche dont l'épaisseur est comprise entre de 5 et 500µm, en particulier de 10 et 400 µm, voire de 20 et 300 µm, voire encore entre 50 et 250 µm. Cette épaisseur pourra varier en fonction de la viscosité et de la composition de la composition, de la nature du support ainsi que du nombre d'applications sur ledit support.

Par l'expression «composition solide», on entend ici, par opposition à une « composition liquide », une composition qui ne coule pas sous l'effet de son propre poids et n'est pas déformable par l'effet de son propre poids ; une composition solide peut être ainsi semi-rigide ou souple. A contrario, une « composition liquide » (ou fluide) est une composition pouvant s'écouler sous son propre poids, être versée, transvasée. Une composition liquide (ou fluide) correspond, dans le cadre de la présente invention à une composition de type peinture ou encre, par exemple.

La méthode selon l'invention est aussi caractérisée en ce que la composition solide est solidaire d'un support, en particulier sous la forme d'une couche mince qui adhère audit support sur lequel elle a été appliquée et a durci.

Selon un mode de réalisation particulier, le support est en une matière choisie dans le groupe comprenant verre, textile, papier, carton, plastique, brique, métal et céramique.

Par l'expression support, on entend ici tout élément matériel qui est revêtu en totalité ou partiellement par la composition solide.

Un support peut comprendre ou consister en une surface continue plus ou moins étendue et plus ou moins plane comme une paroi, opaque ou transparente, par exemple un mur, un sol ou une étendue vitrée telle qu'une fenêtre.

Un support peut aussi comprendre un article, c'est-à-dire un objet discret ou individualisé, dont la surface sera revêtue, en totalité ou en partie, par la composition solide.

Ainsi il est aussi décrit un article comprenant une composition solide. L'article peut être en verre, textile, papier, carton, plastique, brique, métal ou céramique.

Un article peut se présenter sous la forme d'un tapis, un coussin, un panier, une couverture, un collier, un harnais, une selle, un jouet, une balle, un ballon, une peluche, une corde, un anneau, un tronc, une tour, par exemple.

Selon un mode avantageux de réalisation, la méthode selon l'invention est caractérisée en ce que le copolymère à blocs acryliques est un copolymère bi-blocs ou un copolymère tri-blocs.

Plus particulièrement, le copolymère tri-blocs comprend au plus 2 blocs identiques.

De manière avantageuse le polyméthacrylate d'alkyle est le polyméthacrylate de méthyle (PMMA).

Avantageusement encore, le polyacrylate d'alkyle est choisi dans le groupe constitué par le polyacrylate de butyle (PABu) et un copolymère d'acrylate de butyle et d'acrylate de 2-éthyl-héxyl.

Plus particulièrement, le copolymère à blocs acryliques est un copolymère tri-blocs du type PMMA-PABu-PMMA.

Dans le cadre de la présente invention, l'expression « polymère à blocs » représente un polymère dont les macromolécules sont constituées de blocs enchaînés linéairement. Les blocs peuvent être assemblés directement ou par l'intermédiaire d'une unité constitutive qui ne fait pas partie intégrante des blocs.

Dans le cadre de la présente invention, l'expression « copolymère à blocs » représente un copolymère à blocs issu de plusieurs espèces de polymères.

Dans le cadre de la présente invention, l'expression « bloc » représente la partie d'une macromolécule comprenant une pluralité d'unités constitutives et qui possède au moins une particularité de constitution ou de configuration qui n'apparaît pas dans les parties adjacentes.

L'expression « substance sémiochimique » qualifie une substance chimique émise par une plante ou un animal dans l'environnement et qui a valeur de signal entre les êtres vivants.

L'expression « composition comprenant une substance sémiochimique » fait référence à une composition, typiquement une composition liquide qui comprend, ou consiste en, une ou plusieurs substances sémiochimiques, éventuellement solubilisée(s) dans un solvant.

Les substances sémiochimiques sont classées en phéromones - qui permettent la communication entre des individus de la même espèce - et allomones, kairomones et synomones qui sont échangées entre des animaux ou des plantes appartenant à des espèces différentes. Les substances sémiochimiques peuvent être perçues par l'odorat pour les composés volatils, ou par le goût pour les composés non volatils. Les informations portées par les sémiochimiques peuvent permettre la localisation et la reconnaissance d'un partenaire sexuel, par exemple.

Les substances sémiochimiques et plus particulièrement les phéromones sont des composés chimiques dont un grand nombre d'exemples (8000) est donné dans la base de données accessible en ligne Pherobase (www.pherobase.com).

Selon un mode de réalisation de l'invention la substance sémiochimique est une substance sémiochimique volatile, en particulier une substance sémiochimique volatile à chaîne grasse, et est avantageusement choisie dans le groupe des phéromones.

De manière particulièrement préférée, la substance sémiochimique volatile est lipophile et est une phéromone à chaine grasse.

Par l'expression « chaîne grasse », il est entendu au sens de la présente invention, une chaîne aliphatique hydrocarbonée linéaire ou ramifiée, éventuellement insaturée, comportant 5 à 18, 6 à 16 ou 5 à 16 atomes de carbone, conférant ainsi un caractère lipophile à la substance sémiochimique.

L'expression « volatile » (ou volatil) fait référence à la grande volatilité de la substance sémiochimique qui peut passer facilement de l'état liquide à l'état gazeux, dans les conditions ambiantes de pression et de température, c'est-à-dire environ 20°C et 760 mm de Hg. Un liquide « volatil » étant un liquide dont la pression de vapeur saturante à 20°C est supérieure à 0,01 mm de Hg, préférentiellement elle est comprise entre 0,01 et 20, de manière plus préférentielle entre 0,01 et 10, plus préférentiellement entre 0,01 et 5.

Parmi les exemples de phéromones à chaîne grasse, des phéromones connues et utilisables selon la présente invention sont : les alkanols et alkénols volatiles ayant de 5 à 18 carbones, les alkanals et alkénals volatiles ayant de 5 à 18 carbones, les alkanones ayant de 6 à 18 carbones, le 1,7-dioxaspirononane,le 3-ou 4-hydroxy-1,7-dioxaspiro-undecane, l'alcool benzytique, le Z-(9)-tricosène (muscature), héneicosène, les acides diacetyl ou alcanoïques ayant de 5 to 16 carbones tels que l'acide caprylique, l'acide laurylique, le pinène, le méthyleugenol, l'éthyldodécanoate, le tert-butyl 4-(or 5-)chloro-2-éthylcyclohexane-carboxylate, la mycrénone, la cucurbitacine, le trimédlure et le (E,E)-8,10-dodécadien-1-ol (codlémone).

De manière avantageuse la substance semiochimique volatile peut être choisie parmi le ferruginéol, la ferruginéone ou un mélange ferruginéol-ferruginéone.

D'autres exemples de phéromones à chaîne grasse connues sont : le Z-5-Décényl acétate, le dodécanyl acétate, le Z-7- dodécényl acetate, le E-7-dodécényl acetate, le Z-8-dodécényl acetate, le E-8-dodécényl acetate, le Z-9- dodécényl acétate, le E-9-dodécényl acétate, le E-10-dodécényl acétate, le 11-dodécényl acétate, le Z- 9,11-dodécadiényl acétate, le E-9,11-dodécadiényl acétate, le Z-11-tridécényl acétate, le E-11-tridécényl acétate, le tétradécényl acétate, le E-7-tétradécényl acétate, le Z-8-tétradécényl acétate, le E-8-tetradacényl acétate, le Z-9-tétradécényl acétate, le E-9-tétradécényl acétate, le Z-10-tétradécényl acétate, le E-10-tétradécényl acétate, le Z-11-tétradécényl acétate, le E-11-tétradécényl acétate, le Z-12-pentadécényl acétate, le E-12-pentadécényl acétate, l'hexadécanyl acétate, le Z-7-hexadécényl acétate, le Z-11-hexadécényl acétate, le E-11-hexadécényl acétate, l'octadécanyl acétate, le E,Z-7,9- dodécadiényl acétate, le Z,E-7,9-dodécadiényl acetate, le E,E-7,9-dodécadiényl acétate, le Z,Z-7,9-dodécadiényl acétate, le E,E-8,10-dodécadienyl acetate, le E,Z-9,12-dodécadiényl acétate, le E,Z-4,7- tri-décadiényl acétate, le 4-méthoxy-cinnamaldéhyde, la [béta]-ionone, l'estragol, l'eugenol, l' indole, le 8-méthyl-2-décyl propanoate, le E,E-9,11-tétradécadiényl acétate, le Z,Z-9,12-tétradécadiényl acétate, le Z,Z-7,11-héxadécadiényl acétate, le E,Z-7,11-héxadécadiényl acetate, le Z,E-7,11-hexadécadiényl acétate, le E,E-7,11-hexadécadiényl acétate, le Z,Z-11,13-hexadécadiényl acétate le Y,Z-11,13-hexadécadiényl acetate, le Z,E-3,13-octadécadiényl acétate, le E,Z-3,13-octadécadiényl acétate, le E,E-3,13-octadécadiényl acétate, l'hexanol, l'heptanol, l'octanol, le décanol, le Z-6-nonénol, le E-6-nonénol, le 4méthyl 5nonanol, la 4 méthyl 5 nonanone, le dodécanol, le 11-dodécénol, le Z-7-dodécénol, le E-7-dodécénol, le Z-8-dodécénol, le E-8-dodécénol, le E-9-dodécénol, le Z-9-dodécénol, le E-9,11-dodécadiénol, le Z-9,11-dodécadiénol, le Z,E-5,7-dodécadiénol, le E,E-5,7-dodécadiénol, le E,E-8,10-dodécadiénol, le E,Z-8,10-dodécadiénol, le Z,Z-8,10-dodécadiénol, le Z,E-8,10-dodécadiénol, le E,Z-7,9-dodécadiénol, le Z,Z-7,9-dodécadiénol, le E-5-tétradécénol, le Z-8-tétradécénol, le Z-9-tétradécénol, le E-9-tetradécénol, le Z-10- tétradécénol, le Z-11-tétradécénol, le E-11-tétradécénol, le Z-11-hexadécénol, le Z,E-9, 11-tétradécadiénol, le Z,E-9,12-tétradécadiénol, le Z,Z-9,12-tétradécadiénol, le Z,Z-10,12-tetradécadiénol, le Z,Z-7,11-hexadécadiénol, Z,E-7,11-hexadecadiénol, (E)-14-méthyl-8-hexadécén-1-ol, le (Z)-14-méthyl-8-hexadécén-1-ol, le E,E-10,12-hexadécadiénol, le E,Z-10,12-hexadécadiénol, le dodécanal, le Z- 9-dodécénal, le tétradécanal, le Z-7-tétradécénal, le Z-9-tétradécénal, le Z-11-tétradécénal, le E-11-tétradécénal, le E-11,13-tétradécadiénal, le E,E-8,10-tétradécadiénal, le Z, E-9,11-tétradécadiénal, le Z, E-9,12-tétradécadiénal, l'hexadécanal, le Z-8-hexadécénal, le Z-9-hexadécénal, le Z-10-hexadécénal, le E-10-hexadécénal, le Z-11-hexadécénal, le E-11-hexadécénal, le Z-12-hexadécénal, le Z-13-hexadécénal, le (Z)-14-méthyl-8-hexadécénal, le (E)-14-méthyl-8-hexadécénal, le Z,Z-7, 11-hexadécadiénal, le Z,E-7,11-hexadécadiénal, le Z,E-9, 11-hexadécadiénal, le E,E-10, 12-hexadécadiénal, le E,Z-10, 12-hexadécadiénal, le Z, E-10,12-hexadécadiénal, le Z,Z-10,12-hexadécadiénal, le Z,Z-11, 13-hexadécadiénal, l'octadécanal, le Z-11-octadécénal, le E-13-octadécénal, le Z-13-octadécénal, le Z-5-décényl-3-méthyl butanoate, la disparlure: (+) cis-7,8-epoxy-2-methyloctadecane, le seudénol: 3-methyl-2-cyclohexen-1-ol, le sulcatol: 6-methyl-5-hepten-2-ol, l'ipsénol: 2-methyl-6-methylene-7- octen-4-ol, l'ipsdiénol: 2-methyl-6-methylene-2, 7-octadien-4-ol, la grandiure I : cis-2-isopropenyl-1-methylcyclobutane-ethanol, la grandiure II : Z-3,3-dimethyl-1-cyclohexane-ethanol, la grandiure III : Z-3,3-dimethyl-1-cyclohexane-acataldéhyde, la grandiure IV: E-3,3-diméthyl-1-cyclohexane- acétaldéhyde, cis-2-ver-benol: cis-4,6,6-triméthylbicyclo[3, 1,1]hept-3-en-2-ol, la cucurbitacine, 2- méthyl-3-buten-2-ol, 4-méthyl-3-heptanol, la cucurbitacine, 2-méthyl-3-buten-2-ol, 4-méthyl-3- heptanol, l'[alpha]-pinène: 2,6,6-triméthylbicyclo[3, 1,1]hepten-2-ène, l'[alpha]-caryophyllène: 4, 11,11-triméthyl-8-méthylène-bicyclo[7,2,0]undécane, le Z-9-tricosène, l'[alpha]-multistriatine, le 2-(2-endo,4-endo)-5-éthyl-2,4-diméthyl-6,8-dioxabicyclo [3,2,1] octane, le méthyleugénol: 1,2- dimethoxy-4-(2-propenyl)phenol, la linéatine: 3,3,7-triméthyl-2,9-dioxatricyclo [3,3, 1,0] nonane, le chalcogran : 2-éthyl-1,6-dioxaspiro[4,4]nonane, la frontaline : 1,5-diméthyl-6,8-dioxabicyclo[3,2, 1]octane, l'endo-brevicomine : endo-7-éthyl-5-méthyl-6,8-dioxabicyclo[3,2,1]octane, l'exo-brévicomine : exo-7-éthyl-5-méthyl-6,8-dioxabicyclo[3,2,1]octane, la (Z)-5-(1-décényl)dihydro-2-(3H)-furanone, le farnésol : 3,7,11-triméthyl-2,6, le 10-dodécatrien-1-ol, le nérolidol 3,7-11-triméthyl-1,6,10-dodécatrién-3-ol, le 3-méthyl,6-(1-méthyléthényl)-9-décen-1-ol acétate, le (Z)-3-méthyl-6-(1-méthyléthényl)-3, le 9-décadién-1-ol acétate, le (E)-3,9-méthyl-6-(1-méthyl-éthényl)-5,8-décadién-1-ol acétate, le 3- méthylène-7-méthyl-octen-1-ol propionate, le (Z)-3,7-diméthyl-2,7-octadién-1-ol propionate, (Z)-3,9-diméthyl-6-(1-méthyl-éthényl)-3,9-décadlién-1-ol.

Dans un autre mode de réalisation de la présente invention, la substance sémiochimique volatile est une phéromone animale, en particulier une phéromone de mammifères.

Les mammifères selon l'invention sont choisis préférentiellement parmi les chiens, les chats, les chevaux, les bovins et les cochons.

La phéromone animale, en particulier de mammifères, peut ainsi être choisie parmi les phéromones de chiens, de chats, de chevaux, de bovins et de cochons.

Préférentiellement, la phéromone animale est une phéromone apaisante.

De manière préférentielle, les phéromones de mammifères sont des phéromones apaisantes tels que l'apaisine qui est sécrétée par les femelles lors de l'allaitement ou les phéromones faciales chez le chat.

Parmi les phéromones animales, on peut également distinguer les phéromones de régulation sociale telles que les marqueurs urinaires ou les phéromones félines interdigitales pour marquer leur territoire. Les phéromones selon l'invention sont des phéromones naturelles ou de synthèse.

Dans un mode de réalisation particulier de l'invention, la substance sémiochimique pourra être protégée contre l'action de la lumière et/ou celle de l'oxygène. En effet, lorsque les articles diffuseurs selon l'invention sont utilisés dans des cultures pendant plusieurs mois, il pourra être préférable de protéger la substance sémiochimique d'une altération dans le temps. L'homme du métier a l'habitude d'additionner des antioxydants et des anti-UV aux substances sémiochimiques pour remplir cette fonction. Un avantage du procédé selon l'invention est que les stabilisants UV ou les antioxydants peuvent être déjà contenus dans la composition liquide avant son application sur un support ou son imprégnation par le composé sémiochimique ou bien ajoutés à la composition comprenant la substance sémiochimique avant que celle-ci ne soit incorporée/adsorbée dans/par la composition polymèrique. Ces deux méthodes assurent une protection intime de la substance sémiochimique jusqu'à sa diffusion dans le milieu extérieur.

Les antioxydants peuvent être choisis dans le groupe constitué par la vitamine E, l'hydroxyanisole butylé(BHA), l'hydroxytoluène butylé (BHT) utilisés seuls ou en mélange. Ces antioxydants protègent la substance sémiochimique de la dégradation et peuvent être ajoutés dans des quantités, en pourcentage en poids de la composition liquide ou solide, allant de 0,1% environ à 3% environ, particulièrement entre 0.5 et 2%.

Les additifs anti-UV peuvent être choisis dans le groupe constitué par le bêta-carotène, l'acide p-aminobenzoïque, les amines encombrées et les alkoxyamines encombrées utilisés seuls ou en mélange. Ces anti-UV protègent les sémiochimiques de la dégradation par la lumière et peuvent être ajoutés dans des quantités, en pourcentage en poids de la composition, allant de 0,1% environ à 3% environ, particulièrement entre 0.5 et 2%.

Comme évoqué, la méthode selon l'invention est caractérisée en ce que la phéromone est une phéromone animale, en particulier une phéromone apaisante de mammifères.

Ainsi, selon un mode de réalisation avantageux de l'invention, la méthode est caractérisée en ce que l'étape d.) de diffusion de ladite substance sémiochimique depuis la composition solide imprégnée est réalisée au niveau du lieu de vie d'un animal et que la méthode permet l'apaisement de l'animal. A ce titre, la composition solide peut être appliquée sur support choisi dans le groupe comprenant un tapis, un coussin, un panier, une couverture, une caisse de transport, une niche, une barrière, par exemple.

De plus, selon un mode de réalisation de l'invention, le support sur lequel on applique la composition liquide selon l'invention comprend un article qui est au contact de l'animal ou utilisé par l'animal. Ainsi un support de la composition selon l'invention peut être choisi dans le groupe comprenant un collier, un harnais, une veste, un manteau, une selle, une couverture, par exemple.

Le support de la composition solide peut également comprendre un article avec lequel l'animal interagit et le support est alors choisi dans le groupe comprenant jouet, balle, ballon, peluche, corde, anneau, arbre à chat, tronc, tour, par exemple.

La présente invention vise aussi une composition liquide comprenant au moins une résine polymérique, au moins un solvant, optionnellement au moins un pigment, optionnellement au moins une charge, au moins une substance sémiochimique et au moins un copolymère à blocs acryliques, ledit copolymère à blocs acryliques comprenant au moins un bloc polyméthacrylate d'alkyle et au moins un bloc polyacrylate d'alkyle, caractérisée en ce que la résine polymérique est choisie dans le groupe comprenant les résines cellulosiques, les résines vinyliques et les résines polyuréthanes, mono ou bicomposants.

Une telle composition liquide se présente ainsi sous la forme d'une composition de type peinture ou encre pour revêtement de surface qui permet l'enduction d'un support.

Par enduction on entend ici, que la composition liquide est appliquée sur un support solide qui va être revêtu en partie ou totalement par la composition liquide qui sera solidifiée suite à l'évaporation du solvant et formera la composition solide.

Un autre avantage de la composition selon l'invention est en effet qu'elle peut être appliquée sur toute forme d'objet.

En effet son caractère liquide (ou fluide) permet de l'appliquer sur toute surface et de recouvrir tout ou partie d'un support donné. Ainsi il est possible de l'appliquer sur un support solide ou souple tel qu'un collier, un tissu, un piquet, une barre, une plaque ou une plaquette en tout matériau par exemple, et ce en rapport avec le mode d'utilisation et le lieu de diffusion envisagé.

L'application peut être réalisée au rouleau, au pinceau, par pulvérisation, par trempage ou par tout autre moyen adapté permettant de revêtir le support en toute ou partie par la composition fluide.

La facilité d'application de la composition liquide selon l'invention permet aussi de l'utiliser comme une peinture ou une encre et réaliser toute application sur tout support, en particulier textile, pour le recouvrir en totalité ou en partie, voire en définissant des logos ou des inscriptions et ce selon la volonté ou le désir de l'utilisateur.

Ainsi la composition liquide selon l'invention peut être utilisée dans une méthode d'impression par les techniques de sérigraphie connues de l'homme du métier et ce pour sérigraphier tout support de son choix et ce quel que soit la matière, par exemple sur des vêtements, des jouets ou tout ustensile par exemple.

La composition liquide se solidifie ensuite via l'évaporation sur solvant ce qui permet d'obtenir une composition solide sous la forme d'un revêtement de surface comprenant, ou constitué de, une phase continue de résine polymérique dans laquelle est dispersé le pigment optionnel, la charge optionnelle, le au moins un copolymère à blocs acryliques optionnel, ledit copolymère à blocs acryliques comprenant au moins un bloc polyméthacrylate d'alkyle et au moins un bloc polyacrylate d'alkyle, ainsi que la substance sémiochimique optionnelle.

La composition liquide selon l'invention est aussi caractérisée en ce que la substance sémiochimique représente entre 0 % et 80% en poids de la composition liquide, particulièrement entre 1 et 60%, plus particulièrement encore entre 5 et 50%.

Les supports revêtus de la composition solide, si elle ne contient pas déjà le composé sémiochimique, peuvent ensuite être imprégnés et chargés par une composition comprenant une substance sémiochimique.

Cette imprégnation, ou chargement, peut être réalisé par simple mise en contact de la composition solide avec une composition comprenant un composé sémiochimique. En particulier la composition comprenant ledit composé sémiochimique est sous la forme d'une composition liquide comprenant ledit composé sémiochimique et qui est mise en contact avec la composition solide.

Une telle mise en contact peut être réalisée par vaporisation d'une composition liquide comprenant le composé semiochimique, mais aussi par badigeonnage au pinceau ou au rouleau ou par trempage par exemple.

Il va de soi que compte tenu des prix des substances sémiochimiques, on favorisera une application permettant de limiter les pertes et ainsi une application par aspersion, pulvérisation sera plus avantageuse.

Un autre avantage particulièrement important de la composition est que la composition solide peut être chargée et/ou rechargée par une substance sémiochimique, telle qu'une phéromone.

En effet, une fois que la quantité initiale de composé sémiochimique, absorbée par la composition solide -ou initialement présente dans la composition liquide - a été relarguée et diffusée, il est possible de récupérer la composition solide ou le support revêtu de la composition solide (et ce quelle que soit sa forme) et de ré-imprégner ladite composition de sémiochimique selon le procédé décrit plus avant. De même un mur recouvert par la composition solide pourra être réimprégné en une composition comprenant une substance sémiochimique par mise en contact comme expliqué plus avant.

Ainsi il est aussi décrit un procédé de fabrication d'une composition solide chargée en une substance sémiochimique, comprenant les étapes suivantes :
- fournir une composition solide comprenant une résine polymérique constituant une phase continue dans laquelle est dispersé et immobilisé au moins un copolymère à blocs acryliques comprenant au moins un bloc polyméthacrylate d'alkyle et au moins un bloc polyacrylate d'alkyle, une charge optionnelle et un pigment optionnel ;
- mettre en contact ladite composition avec une composition comprenant une substance sémiochimique pendant un temps et à une température permettant l'imprégnation de ladite composition solide par ladite substance,
- récupérer ladite composition solide imprégnée de substance sémiochimique.

La composition solide est aussi caractérisée en ce qu'une fois imprégnée par la substance sémiochimique, celle-ci représente entre 1% et 80 % en poids de la composition solide, particulièrement entre 1 et 50%, entre 5 et 50%, plus particulièrement encore entre 5 et 40%, voire encore entre 5 et 30%, ou encore entre 5 et 20%.

Une composition solide peut ainsi diffuser et libérer progressivement la substance sémiochimique dans l'environnement jusqu'à épuisement de la quantité de substance sémiochimique contenue. Elle peut ensuite être réutilisée pour un rechargement comme décrit ci-avant, puis une nouvelle diffusion. Et cela peut être répété plusieurs fois.

Un tel avantage est très important car il permet de recycler les supports revêtus de la composition solide, ce qui a un sens tant économique qu'écologique.

Les inventeurs ont remarqué qu'une composition solide en résine polymérique telle que décrite ci-avant avait la capacité à absorber et à relarguer une substance sémiochimique. L'ajout de copolymères à blocs acrylique permet d'améliorer cette propriété de manière notoire mais n'est pas indispensable pour obtenir l'effet technique d'imprégnation/absorption et de relargage.

Le copolymère à blocs acryliques comprenant au moins un bloc polyméthacrylate d'alkyle et au moins un bloc polyacrylate d'alkyle se retrouve dispersé au sein de la phase continue de résine sous la forme d'inclusions qui vont contribuer à capter, absorber, retenir et relarguer la substance sémiochimique.

Ainsi il est aussi décrit une composition solide, caractérisé en ce que la résine polymérique constitue une phase continue dans laquelle est dispersé et immobilisé le au moins un copolymère à blocs acryliques comprenant au moins un bloc polyméthacrylate d'alkyle et au moins un bloc polyacrylate d'alkyle, la charge optionnelle et le pigment optionnel.

Enfin, l'invention concerne enfin l'utilisation d'une composition liquide pour la diffusion de ladite substance sémiochimique, où la composition liquide comprend au moins une résine polymérique, au moins un solvant, optionnellement au moins un pigment, optionnellement au moins une charge, au moins une substance sémiochimique et au moins un copolymère à blocs acryliques, ledit copolymère à blocs acryliques comprenant au moins un bloc polyméthacrylate d'alkyle et au moins un bloc polyacrylate d'alkyle, caractérisée en ce que la résine polymérique est choisie dans le groupe comprenant les résines cellulosiques, les résines vinyliques et les résines polyuréthanes, mono ou bicomposants.

L'invention vise enfin l'utilisation d'une composition liquide selon l'invention pour l'absorption et la diffusion d'une substance sémiochimique, où la composition liquide comprend au moins une résine polymérique, au moins un solvant, optionnellement au moins un pigment, optionnellement au moins une charge, au moins une substance sémiochimique et au moins un copolymère à blocs acryliques, ledit copolymère à blocs acryliques comprenant au moins un bloc polyméthacrylate d'alkyle et au moins un bloc polyacrylate d'alkyle, caractérisée en ce que la résine polymérique est choisie dans le groupe comprenant les résines cellulosiques, les résines vinyliques et les résines polyuréthanes, mono ou bicomposants.

### EXEMPLES

Matériaux et matières premières :
Les matériaux copolymères à blocs sont des matériaux de la gamme nanostrenth^{®} vendu par Arkema comme par exemple le M53, M65 ou le M53F. Les phéromones sont synthétisées par M2i Development ou M2i Salin selon des méthodes déjà reportées dans la littérature. La phéromone de la Lobesia Botrana (Eudémis de la vigne) est le 7E,9Z-dodecadienylacetate (CAS : 54364-62-4) de masse molaire 224,34 g/mol. Le laurate de méthyle (CAS 111-82-0) de masse molaire 214,34 g/mol est un des composants de la composition phéromonale apaisante du FELIWAY. Les encres commerciales sont achetées chez TIFLEX.

Exemple 1: Démonstration de l'effet de rétention sur des films de copolymères blocs :
Une solution de copolymère à bloc M53 dans l'acétate d'éthyle est préparée à 20% poids. Au moyen d'une pipette en verre, 10mL de solution sont déposés dans une barquette en aluminium de 10 cm de diamètre. La barquette est placée dans une étuve ventilée pendant 24 h. Un film homogène de copolymère à bloc est obtenu. 10 barquettes sont ainsi préparées et numérotées de 1 à 20.

Sur les barquettes numérotées de 1 à 5 sont déposés 100 mg de phéromone de la lobesia (7E,9Z-dodecadienylacetate). Sur celles numérotées de 6 à 10, sont déposés 100 mg de laurate de méthyle. Les deux actifs sont appliqués sur le film au moyen d'un spray de solution de phéromones diluées à 20% dans le pentane. Les barquettes sont laissées à l'air libre jusqu'à la disparition visuelle de l'actif. Les barquettes sont déposées dans une étuve ventilée maintenue à 40°C (lobesia) ou 30°C (méthyl laurate). Deux barquettes vierges sont chargées avec la même quantité de chaque actif.

Les barquettes sont régulièrement analysées pour déterminer le taux de phéromone résiduel (par simple pesée ou préférentiellement par chromatographie gazeuse).

Dans le tableau 1 suivant est reporté le temps de diffusion en étuve nécessaire pour arriver en dessous de 10% d'actif résiduel par rapport à la quantité introduite.

**[Table 1]**

| | Barquette nue (référence) | 1 | 2 | 3 | 4 | 5 | 6 | 7 | 8 | 9 | 10 |
|---|---|---|---|---|---|---|---|---|---|---|---|
| Lobesia (%res) | 72h | - | - | - | - | - | 720h | 696h | 744h | 720h | 672h |
| Methyl laurate (%res) | 24h | 240h | 264h | 226h | 240h | 240h | - | - | - | - | - |

Cet exemple montre l'effet de rétention d'une surface traité par un dépôt de film de copolymère à bloc par rapport à une surface non traité.

Exemple 2 : Démonstration de l'effet du copobloc par comparaison d'une encre non-additivée de copolymères blocs avec une encre additivée.

Des plaques de verre carrées de 10 cm de côté sont imprimées par sérigraphie traditionnelle avec deux encres commerciales de type polyworks (TIFLEX) et vinylique (TIFLEX) de couleur bleue. Une série de plaques est utilisée sans traitement tandis que l'autre série est traitée en sprayant d'une solution de copolymères blocs M53 à 10% sans acétate d'éthyle. Une fois séchées, ces plaques ne présentent pas de différence visuelle avec les plaques non traitées. Sur les quatre séries de plaques, sont sprayés de la phéromone de lobésia et du laurate de méthyle en solution à 20% dans du pentane. Les plaques sont laissées à l'air puis mises à diffuser en étuve ventilée respectivement à 30 °C et 40°C pour les plaques imprégnées de phéromone de lobésia et les plaques imprégnées de laurate de méthyle. Les barquettes sont régulièrement analysées pour déterminer le taux de phéromone résiduel (par simple pesée ou préférentiellement par chromatographie gazeuse).

Dans le tableau 2 suivant est reporté le temps de diffusion en étuve nécessaire pour arriver en dessous de 10% d'actif résiduel par rapport à la quantité introduite.

**[Table 2]**

| | | Encre Polyworks | | | | Encre vinylique | | | |
|---|---|---|---|---|---|---|---|---|---|
| | Barquette nue (référenc e) | Sans additif copoblo c | Avec additif copoblo c | Sans additif copoblo c | Avec additif copoblo c | Sans additif copoblo c | Avec additif copoblo c | Sans additif copoblo c | Avec additif copoblo c 8 |
| Lobesi a (%res) | 72 h | 72h | 168h | - | - | 72h | 168h | - | - |
| Methy l laurat e (%res) | 24 h | - | - | 24h | 96h | - | - | 24h | 96h |

Cet exemple montre l'effet de rétention d'une surface enduite d'encre et additivée de copolymère à blocs par rapport à une surface non traitée et une surface enduite d'encre.

## Revendications

1. Méthode de diffusion d'une substance sémiochimique comprenant les étapes suivantes :
a. fourniture d'une composition solide comprenant une résine polymérique, une charge optionnelle et un pigment optionnel,
b. Mise en contact d'une composition comprenant une substance sémiochimique avec la composition solide,
c. Imprégnation de la composition solide par la composition comprenant la substance sémiochimique,
d. Diffusion de ladite substance sémiochimique depuis la composition solide,
e. optionnellement répétition des étapes b à d, **caractérisé en ce que** la composition solide comprenant une résine polymérique comprend en outre au moins un copolymère à blocs acryliques, ledit copolymère à blocs acryliques comprenant au moins un bloc polyméthacrylate d'alkyle et au moins un bloc polyacrylate d'alkyle ; ledit copolymère étant dispersé et immobilisé dans la résine polymérique, **caractérisée en ce que** l'étape a) est précédée des étapes α1) à α3) ; l'étape α1) comprenant la fourniture d'une composition liquide comprenant au moins une résine polymérique, au moins un solvant, optionnellement au moins un pigment, optionnellement au moins une charge et au moins un copolymère à blocs acryliques, ledit copolymère à blocs acryliques comprenant au moins un bloc polyméthacrylate d'alkyle et au moins un bloc polyacrylate d'alkyle ; l'étape α2) comprenant l'application de la composition liquide sur un support et l'étape α3) comprenant l'évaporation du solvant.

2. Méthode selon la revendication 1, **caractérisée en ce que** la composition solide est solidaire d'un support, en particulier sous la forme d'une couche mince, d'une épaisseur comprise entre 5 et 500 µm.

3. Méthode selon la revendication 2, **caractérisée en ce que** le support est en une matière choisie dans le groupe comprenant verre, textile, papier, carton, plastique, métal et céramique.

4. Méthode selon l'une des revendications 1 à 3, **caractérisée en ce que** le copolymère à blocs acryliques est un copolymère bi-blocs ou un copolymère tri-blocs.

5. Méthode selon l'une des revendications 1 à 4, **caractérisée en ce que** le copolymère tri-blocs comprend au plus 2 blocs identiques.

6. Méthode selon l'une des revendications 1 à 5, **caractérisée en ce que** le polyméthacrylate d'alkyle est le polyméthacrylate de méthyle (PMMA).

7. Méthode selon l'une des revendications 1 à 6, **caractérisée en ce que** le polyacrylate d'alkyle est choisi dans le groupe constitué par le polyacrylate de butyle (PABu) et un copolymère d'acrylate de butyle et d'acrylate de 2-éthyl-héxyl.

8. Méthode selon l'une des revendications 1 à 7, **caractérisée en ce que** le copolymère à blocs acryliques est un copolymère tri-blocs du type PMMA-PABu-PMMA.

9. Méthode selon l'une des revendications 1 à 8, **caractérisée en ce que** la substance sémiochimique est une phéromone animale.

10. Méthode selon la revendication 9, **caractérisé en ce que** phéromone animale est choisie parmi les phéromones de chiens, de chats, de chevaux, de bovins et de cochons.

11. Méthode selon l'une des revendications 9 et 10, **caractérisé en ce que** la phéromone animale est une phéromone apaisante.

12. Méthode selon l'une des revendications 9 à 11, **caractérisée en ce que** l'étape d.) de diffusion de ladite substance sémiochimique depuis la composition solide imprégnée est réalisée au niveau du lieu de vie d'un animal.

13. Méthode selon la revendication 12, **caractérisé en ce que** la composition solide selon l'invention est appliquée sur support choisi dans le groupe comprenant un tapis, un coussin, un panier, une couverture, une caisse de transport, une niche, une barrière, un collier, un harnais, une veste, un manteau, une selle.

14. Composition liquide comprenant au moins une résine polymérique, au moins un solvant, optionnellement au moins un pigment, optionnellement au moins une charge, au moins une substance sémiochimique et au moins un copolymère à blocs acryliques, ledit copolymère à blocs acryliques comprenant au moins un bloc polyméthacrylate d'alkyle et au moins un bloc polyacrylate d'alkyle, **caractérisée en ce que** la résine polymérique est choisie dans le groupe comprenant les résines cellulosiques, les résines vinyliques et les résines polyuréthanes, mono ou bicomposants.

15. Utilisation d'une composition selon la revendication 14 pour la diffusion de ladite substance sémiochimique.

16. Utilisation d'une composition selon la revendication 14 pour l'absorption et la diffusion d'une substance sémiochimique.

## Patentansprüche

1. Verfahren zur Diffusion einer semiochemischen Substanz, umfassend die folgenden Schritte:
a. Bereitstellen einer festen Zusammensetzung, die ein polymeres Harz, einen optionalen Füllstoff und ein optionales Pigment umfasst,
b. Inkontaktbringen einer Zusammensetzung, die eine semiochemische Substanz umfasst, mit der festen Zusammensetzung,
c. Imprägnieren der festen Zusammensetzung durch die Zusammensetzung, die die semiochemische Substanz umfasst,
d. Diffusion der semiochemischen Substanz aus der festen Zusammensetzung,
e. optional Wiederholen der Schritte b bis d, **dadurch gekennzeichnet, dass** die feste Zusammensetzung, die ein polymeres Harz umfasst, ferner mindestens ein Acrylblockcopolymer umfasst, wobei das Acrylblockcopolymer mindestens einen Polyalkylmethacrylatblock und mindestens einen Polyalkylacrylatblock umfasst; wobei das Copolymer in dem polymeren Harz dispergiert und immobilisiert ist, **dadurch gekennzeichnet, dass** dem Schritt a) die Schritte α1) bis α3) vorangehen; wobei Schritt α1) das Bereitstellen einer flüssigen Zusammensetzung umfasst, die mindestens ein polymeres Harz, mindestens ein Lösungsmittel, optional mindestens ein Pigment, optional mindestens einen Füllstoff und mindestens ein Acrylblockcopolymer umfasst, wobei das Acrylblockcopolymer mindestens einen Polyalkylmethacrylatblock und mindestens einen Polyalkylacrylatblock umfasst; wobei Schritt α2) das Auftragen der flüssigen Zusammensetzung auf einen Träger umfasst und Schritt α3) das Verdampfen des Lösungsmittels umfasst.

2. Verfahren nach Anspruch 1, **dadurch gekennzeichnet, dass** die feste Zusammensetzung fest mit einem Träger verbunden ist, insbesondere in Form einer dünnen Schicht mit einer Dicke zwischen 5 und 500 µm.

3. Verfahren nach Anspruch 2, **dadurch gekennzeichnet, dass** der Träger aus einem Material besteht, das aus der Gruppe ausgewählt ist, die Glas, Textil, Papier, Karton, Kunststoff, Metall und Keramik umfasst.

4. Verfahren nach einem der Ansprüche 1 bis 3,
**dadurch gekennzeichnet, dass** das Acrylblockcopolymer ein Diblockcopolymer oder ein Triblockcopolymer ist.

5. Verfahren nach einem der Ansprüche 1 bis 4,
**dadurch gekennzeichnet, dass** das Triblockcopolymer höchstens 2 identische Blöcke umfasst.

6. Verfahren nach einem der Ansprüche 1 bis 5,
**dadurch gekennzeichnet, dass** das Polyalkylmethacrylat Polymethylmethacrylat (PMMA) ist.

7. Verfahren nach einem der Ansprüche 1 bis 6,
**dadurch gekennzeichnet, dass** das Polyalkylacrylat aus der Gruppe ausgewählt ist, die aus Polybutylacrylat (PABu) und einem Copolymer aus Butylacrylat und 2-Ethylhexylacrylat besteht.

8. Verfahren nach einem der Ansprüche 1 bis 7,
**dadurch gekennzeichnet, dass** das Acrylblockcopolymer ein Triblockcopolymer vom Typ PMMA-PABu-PMMA ist.

9. Verfahren nach einem der Ansprüche 1 bis 8,
**dadurch gekennzeichnet, dass** die semiochemische Substanz ein tierisches Pheromon ist.

10. Verfahren nach Anspruch 9, **dadurch gekennzeichnet, dass** das tierische Pheromon aus Pheromonen von Hunden, Katzen, Pferden, Rindern und Schweinen ausgewählt ist.

11. Verfahren nach einem der Ansprüche 9 und 10,
**dadurch gekennzeichnet, dass** das tierische Pheromon ein beruhigendes Pheromon ist.

12. Verfahren nach einem der Ansprüche 9 bis 11,
**dadurch gekennzeichnet, dass** der Schritt d.) der Diffusion der semiochemischen Substanz aus der imprägnierten festen Zusammensetzung im Lebensraum eines Tieres durchgeführt wird.

13. Verfahren nach Anspruch 12, **dadurch gekennzeichnet, dass** die erfindungsgemäße feste Zusammensetzung auf einen Träger aufgebracht wird, der aus der Gruppe ausgewählt ist, die einen Teppich, ein Kissen, einen Korb, eine Decke, eine Transportbox, eine Hundehütte, eine Barriere, ein Halsband, ein Geschirr, eine Weste, einen Mantel, einen Sattel umfasst.

14. Flüssige Zusammensetzung umfassend mindestens ein polymeres Harz, mindestens ein Lösungsmittel, optional mindestens ein Pigment, optional mindestens einen Füllstoff, mindestens eine semiochemische Substanz und mindestens ein Acrylblockcopolymer, wobei das Acrylblockcopolymer mindestens einen Polyalkylmethacrylatblock und mindestens einen Polyalkylacrylatblock umfasst, **dadurch gekennzeichnet, dass** das polymere Harz aus der Gruppe ausgewählt ist, die Celluloseharze, Vinylharze und Polyurethanharze, die ein- oder zweikomponentig sind, umfasst.

15. Verwendung einer Zusammensetzung nach Anspruch 14 zur Diffusion der semiochemischen Substanz.

16. Verwendung einer Zusammensetzung nach Anspruch 14 zur Absorption und Diffusion einer semiochemischen Substanz.

## Claims

1. Method for diffusing a semiochemical substance comprising the following steps:
a. providing a solid composition comprising a polymeric resin, an optional filler and an optional pigment,
b. bringing a composition comprising a semiochemical substance into contact with the solid composition,
c. impregnating the solid composition with the composition comprising the semiochemical substance,
d. diffusing said semiochemical substance from the solid composition,
e. optionally repeating steps b to d, **characterized in that** the solid composition comprising a polymeric resin further comprises at least one acrylic block copolymer, said acrylic block copolymer comprising at least one alkyl polymethacrylate block and at least one alkyl polyacrylate block; said copolymer being dispersed and immobilized in the polymeric resin, **characterized in that** step a) is preceded by steps α1) to α3); step α1) comprising providing a liquid composition comprising at least one polymeric resin, at least one solvent, optionally at least one pigment, optionally at least one filler and at least one acrylic block copolymer, said acrylic block copolymer comprising at least one alkyl polymethacrylate block and at least one alkyl polyacrylate block; step α2) comprising applying the liquid composition on a substrate and step α3) comprising evaporating the solvent.

2. Method according to claim 1, **characterized in that** the solid composition is secured to a substrate, in particular in the form of a thin layer with a thickness of between 5 and 500 µm.

3. Method according to claim 2, **characterized in that** the substrate is made of a material selected from the group comprising glass, textile, paper, cardboard, plastics, metal and ceramic.

4. Method according to one of claims 1 to 3, **characterized in that** the acrylic block copolymer is a bi-block copolymer or a tri-block copolymer.

5. Method according to one of claims 1 to 4, **characterized in that** the tri-block copolymer comprises at most 2 identical blocks.

6. Method according to one of claims 1 to 5, **characterized in that** the alkyl polymethacrylate is polymethyl methacrylate (PMMA).

7. Method according to one of claims 1 to 6, **characterized in that** the alkyl polyacrylate is selected from the group consisting of poly butyl acrylate (PABu) and a copolymer of butyl acrylate and 2-ethylhexyl acrylate.

8. Method according to one of claims 1 to 7, **characterized in that** the acrylic block copolymer is a tri-block copolymer of the PMMA-PABu-PMMA type.

9. Method according to one of claims 1 to 8, **characterized in that** the semiochemical substance is an animal pheromone.

10. Method according to claim 9, **characterized in that** the animal pheromone is selected from pheromones of dogs, cats, horses, cattle and pigs.

11. Method according to one of claims 9 and 10, **characterized in that** the animal pheromone is an appeasing pheromone.

12. Method according to one of claims 9 to 11, **characterized in that** step d.) of diffusing said semiochemical substance from the impregnated solid composition is carried out at the living environment of an animal.

13. Method according to claim 12, **characterized in that** the solid composition according to the invention is applied on a substrate selected from the group comprising a mat, a cushion, a basket, a cover, a transport case, a pet house, a barrier, a collar, a harness, a jacket, a mantle, a saddle.

14. Liquid composition comprising at least one polymeric resin, at least one solvent, optionally at least one pigment, optionally at least one filler, optionally at least one semiochemical substance and at least one acrylic block copolymer, said acrylic block copolymer comprising at least one alkyl polymethacrylate block and at least one alkyl polyacrylate block, **characterized in that** the polymeric resin is selected from the group comprising cellulosic resins, vinyl resins and polyurethane, mono or bicomponent resins.

15. Use of a composition according to claim 14 for diffusing said semiochemical substance.

16. Use of a composition according to claim 14 for absorbing and diffusing a semiochemical substance.
